# EUROPEAN PATENT APPLICATION

(11) **EP 2 055 461 A1**
(43) Date of publication of application: **06.05.2009**
(21) Application number: 08017652.2
(22) Date of filing: 08.10.2008
(51) Int. Cl.: B29C 53/80, B29B 15/12

(54) **Method and apparatus for impregnating fibres during fibre winding molding**

(30) Priority: 30.10.2007 JP 2007281277
(71) Applicant: Murata Machinery, Ltd., Kyoto 601 (JP)
(72) Inventor: Uozumi, Tadashi, Kyoto-shi Kyoto 612-8686 (JP); Tanigawa, Motohiro, Kyoto-shi Kyoto 612-8686 (JP); Takashima, Hiroki, Kyoto-shi Kyoto 612-8686 (JP)
(74) Representative: Liedl, Christine

(57) **Abstract**

A resin adhesion method and a resin adhesion apparatus in FW molding capable of achieving higher speed in the resin adhesion task and capable of facilitating maintenance are provided. In the present invention, a resin is adhered to a fiber by injecting the resin towards a surface of the fiber through a droplet injection method. A resin adhesion apparatus (4) includes a droplet injection device (10) having a great number of base resin injection nozzles (29a) and curing agent injection nozzles (29b), a traveling device (11) which travels the fiber with a predetermined opposing spacing with the nozzles, a first path (14) which includes a base resin tank (13) filled with base resin (12) and which supplies the base resin to the droplet injection device, and a second path (17) which includes a curing agent tank (16) filled with curing agent (15) and which supplies the curing agent to the droplet injection device (10).

## Description

### BACKGROUND OF THE INVENTION

### 1. Field of the Invention

The present invention relates to a resin adhesion method and a resin adhesion apparatus which causes a resin to adhere to a fiber in filament winding molding.

### 2. Description of the Related Art

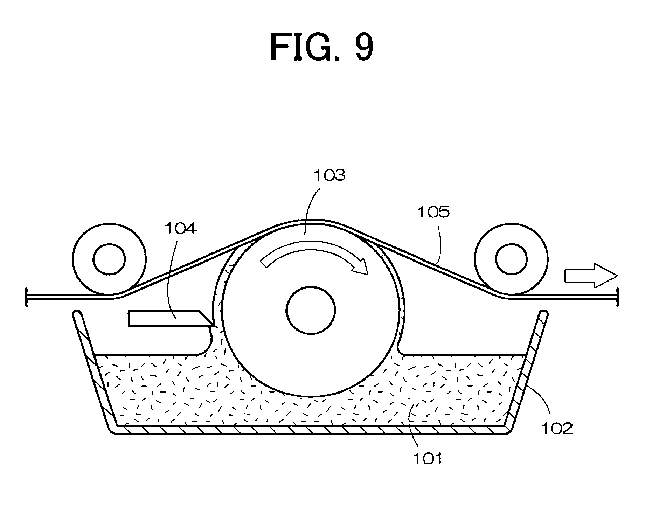

A configuration of a resin adhesion apparatus in a conventional filament winding molding (hereinafter appropriately referred to as FW molding) is shown in FIG. 9. The resin adhesion apparatus includes a resin bath 102 accommodating a resin 101 therein, a rotation roller 103 arranged with a lower part immersed in the resin 101 in the resin bath 102, and a knife edge 104 which adjusts the amount of the resin 101 adhered to a surface of the rotation roller 103, where the resin 101 adhered to the surface of the rotation roller 103 is adhered to fiber 105, which is fed while contacting an upper part of the rotation roller 103, by rotating the rotation roller 103 at a speed corresponding to the feeding speed of the fiber 105. Similar configuration is found in Japanese Laid-Open Patent Publication No. 2007-185827.

In this type of FW molding, enhancement in productivity is an important problem to be solved, and the resin adhesion process is desirably advanced at a higher speed in the resin adhesion apparatus. However, in a roller method shown in FIG. 9 and Japanese Laid-Open Patent Publication No. 2007-185827, sufficient amount of the resin 101 does not adhere to the surface of the rotation roller 103 if a feeding speed of the fiber 105 is increased, and consequently, the resin 101 cannot be sufficiently adhered to the fiber 105. That is, in the roller method, adhesion unevenness may occur in the resin 101 if a processing speed is raised and thus the processing speed is limited, which becomes a hindrance in enhancing a productivity of the FW molding.
In addition, cleaning needs to be carried out on a regular basis to avoid the resin 101 from curing at the surface of the rotation roller 103 in the roller method, and maintenance becomes troublesome.

### SUMMARY OF THE INVENTION

In view of the above situations, it is an object of the present invention to provide a resin adhesion method and a resin adhesion apparatus in the FW molding capable of achieving higher speed in the resin adhesion task and also capable of facilitating maintenance.

In order to overcome the problems described above, preferred embodiments of the present invention relates to a resin adhesion method in a filament winding molding which causes a resin to adhere to a fiber by injecting the resin towards a surface of the fiber through a droplet injection method.
Specific examples of the droplet injection method according to the present invention include a piezo method using a piezo element (piezoelectric element) that is deformed when voltage is applied, a thermal method of injecting resin by generating air bubbles in the resin in the pressure chamber by heating, an ultrasonic wave method, and the like.
"Adhesion" in the present invention is a concept including not only a state in which the resin is deposited on the surface of the fiber, but also a state in which one part is immersed in the fiber.

A light curable resin, heat curable resin, or the like is considered for the resin used in FW molding, but in particular, two-liquid type heat curable resin is preferred. When such two-liquid type resin is used, the method preferably includes base resin injection step of injecting a base resin of the resin towards the surface of the fiber through the droplet injection method; and curing agent injection method of injecting a curing agent towards the surface of the fiber through the droplet injection method before or after the base resin injection step.

The base resin injection step and the curing agent injection step are preferably repeated over a plurality of times. The droplet injection is preferably performed while maintaining the base resin and/or the curing agent at a predetermined temperature.

The present invention relates to a resin adhesion apparatus which causes a resin to adhere to a fiber in a filament winding molding. The resin adhesion apparatus includes a droplet injection device including a great number of base resin injection nozzles and curing agent injection nozzles; a traveling device which travels the fiber with a predetermined opposing spacing with the nozzles; a first path which includes a base resin tank filled with base resin and which supplies the base resin to the droplet injection device; and a second path which includes a curing agent tank filled with curing agent and which supplies the curing agent to the droplet injection device.
Similar to the above, the droplet injection method of the droplet injection device according to the present invention includes a piezo method using a piezo element (piezoelectric element) that is deformed when voltage is applied, a thermal method of injecting resin by generating air bubbles in the resin in the pressure chamber by heating, an ultrasonic wave method, and the like.

The droplet injection device includes a first head with the base resin injection nozzle group and a second head with the curing agent injection nozzle group. In this case, a plurality of first heads and second heads are alternately arranged along a traveling direction of the fiber.

The droplet injection device may include a head in which two types of nozzles, which are the base resin injection nozzle and the curing agent injection nozzle, are arranged in a specific pattern. Specific example of the specific pattern includes a mode in which the nozzle group including the base resin injection nozzle and the nozzle group including the curing agent injection nozzle are alternately arranged along the traveling direction of the fiber.

Constant-temperature means which maintains the base resin and/or the curing agent at a predetermined temperature is further arranged.

In the resin adhesion method and the resin adhesion apparatus of the present invention, the resin is adhered to the fiber by injecting resin towards the surface of the fiber through the droplet injection method, and thus an optimum amount of the resin can be reliably adhered to the fiber. That is, in a conventional roller method, the adhesion amount of the resin per unit length is influenced by the immersed extent of the rotation roller with respect to the resin in the resin bath, the rotation speed of the rotation roller (traveling speed of fiber), and the like, and thus it is difficult to exactly regulate the adhesion amount, and adhesion unevenness easily occurs. According to the present invention, on the other hand, an optimum amount of the resin can be adhered to the fiber since the resin is directly injected towards the surface of the fiber through the droplet injection method.

In the droplet injection method, the injection amount can be exactly regulated in an easy manner by adjusting the injection amount of the resin per unit time to large or small, and an optimum amount of the resin corresponding to the processing speed (traveling speed of fiber) can be supplied to the fiber. Specifically, the injection amount can be adjusted to large or small by changing the supply voltage etc. on the piezo element. The adhesion amount of the resin at the surface of the rotation roller does not lack when the processing speed (traveling speed of fiber) is raised, and as a result, the adhesion unevenness of the resin on the fiber does not occur, whereby the processing speed in the resin adhesion step can be increased. This contributes to higher speed of the FW molding.

The clogging of the nozzle is prevented by simply performing an empty injection periodically or arbitrarily. Therefore, the present invention is superior in that bothersome maintenance such as cleaning of the rotation roller is unnecessary.

When the two-liquid curing type resin is selected, base resin injection step of injecting a base resin of the resin towards the surface of the fiber through the droplet injection method, and curing agent injection method of injecting a curing agent towards the surface of the fiber through the droplet injection method before or after the base resin injection step are preferably provided. Accordingly, the base resin and the curing agent can be mixed at the surface of the fiber, whereby the curing of the resin will not start at the surface of the rotation roller or in the resin bath and the resin will not adhere to the rotation roller etc. as in the conventional roller method, and maintenance such as cleaning of the rotation roller and the like becomes unnecessary.

The base resin injection step and the curing agent injection step are preferably repeated over a plurality of times. Accordingly, the base resin and the curing agent are reliably mixed on the fiber, thereby preventing separation of fiber from the FW molded article caused by mixing defect of the base resin and the curing agent, thereby contributing to enhancement in quality of the FW molded article. Specifically, a first head with the base resin injection nozzle group and a second head with the curing agent injection nozzle group are alternately arranged along the traveling direction of the fiber and the base resin and the curing agent are over-painted on the fiber, so that the base resin and the curing agent are mixed. Two types of nozzles, which are the base resin injection nozzle and the curing agent injection nozzle, may be arranged in one head in a specific pattern described above, and thus the base resin and the curing agent merely need to be injected evenly on the resin. The inventors have considered having the liquid amount of the resin (base resin and curing agent) injected from the nozzle in the droplet injection method as an extremely small amount of liquid amount of pico-liter order. Thus, the inventors assumed that both the base resin and the curing agent can be reliably mixed by over-painting or alternately applying the base resin and the curing agent on the resin.

The constant-temperature means which maintains the base resin and/or curing agent at a predetermined temperature is arranged in the resin apparatus, so that droplet injection can be performed while maintaining the base resin and/or the curing agent at a predetermined temperature, whereby clogging of the nozzle can be reliably prevented while ensuring satisfactory viscosity of both the base resin and the curing agent. In epoxy resin as a two-liquid curing type, the resin in the resin bath cannot be heated to higher than or equal to 80°C in the roller method as curing may start when heated to about 80°C with the base resin and the curing agent mixed. In the present invention, however, no problems will arise even if the base resin and the curing agent are separately heated to higher than or equal to 80°C in droplet injection since the base resin and the curing agent are droplet injected separately towards the resin, whereby clogging of the nozzle can be reliably prevented while ensuring satisfactory viscosity of both the base resin and the curing agent. In this type of droplet injection method, it is difficult to have the shape or the injection amount of the droplet constant if the viscosity of the base resin or the curing agent is high. In the present invention, however, the droplet injection is performed while heating the base resin and the curing agent to a predetermined temperature, and thus the shape or the injection amount of the droplet can be stabilized while lowering the respective viscosity. This means that the adhesion amount of the resin with respect to the fiber can be stabilized, thereby contributing to enhancement in quality of the FW molded article as a result.
Other features, elements, processes, steps, characteristics and advantages of the present invention will become more apparent from the following detailed description of preferred embodiments of the present invention with reference to the attached drawings.

### BRIEF DESCRIPTION OF THE DRAWINGS

FIG. 1 is a configuration view of a resin adhesion apparatus according to a first embodiment of the present invention;
FIG. 2 is a perspective view describing the FW molding;
FIG. 3 is a configuration view of a droplet injection device configuring the resin adhesion apparatus;
FIG. 4 is a view describing the configuration of the droplet injection device;
FIGS. 5A and 5B are longitudinal side views showing, in frame format, a resin adhesion state on the fiber by the resin adhesion apparatus;
FIGS. 6A, 6B, and 6C are plan views showing, in frame format, the resin adhesion state on the fiber by the resin adhesion apparatus;
FIGS. 7A and 7B show a resin adhesion apparatus according to a second embodiment of the present invention and show a head configuration (nozzle arrangement) of the resin adhesion apparatus;
FIG. 8 is a view showing a resin adhesion apparatus according to a third embodiment of the present invention, where the resin adhesion apparatus is applied to a helical winding device; and
FIG. 9 is a view showing a conventional resin adhesion apparatus.

### DETAILED DESCRIPTION OF PREFERRED EMBODIMENTS

### (First example)

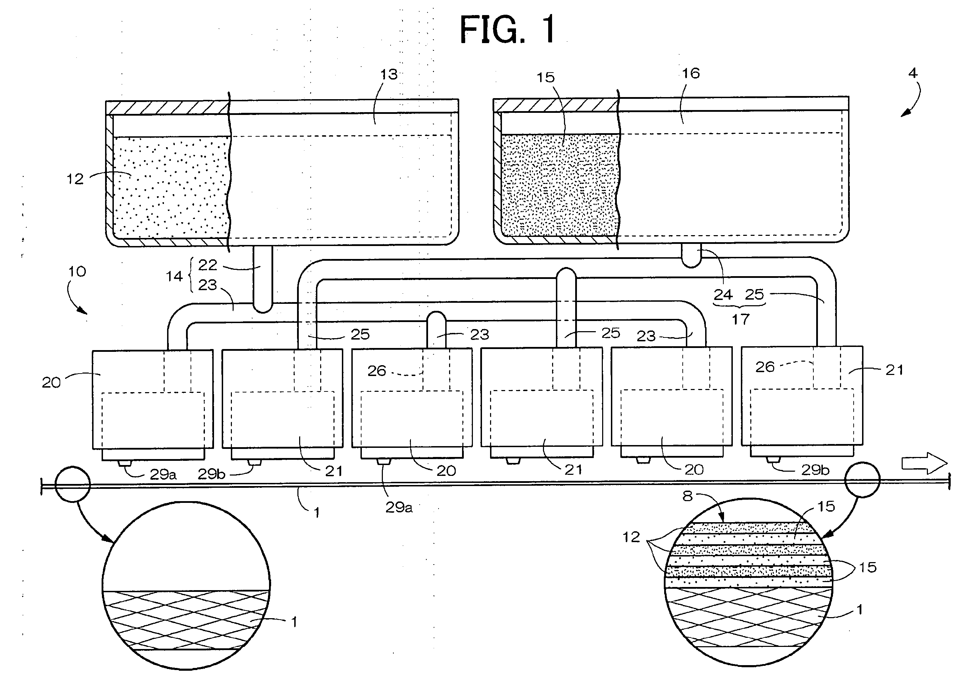

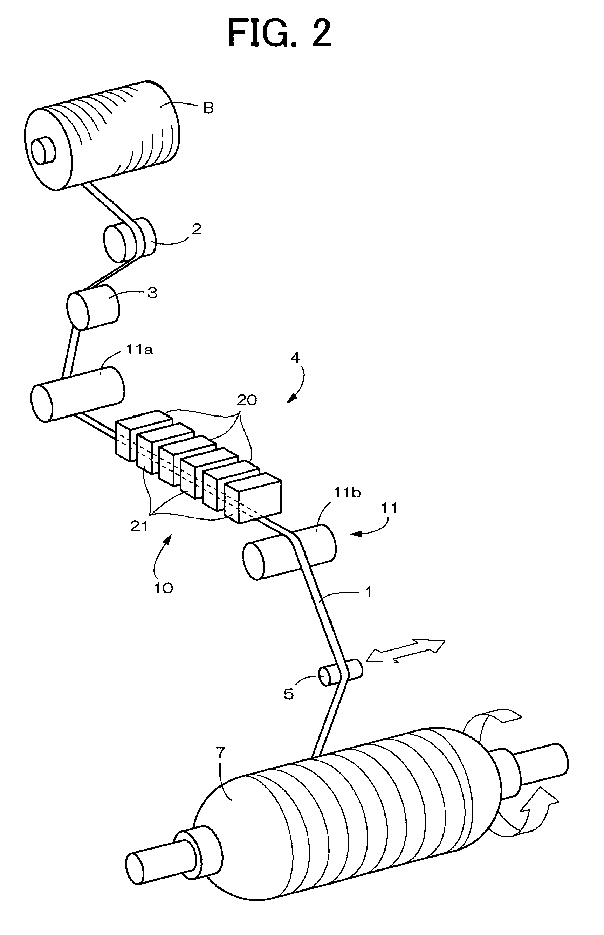

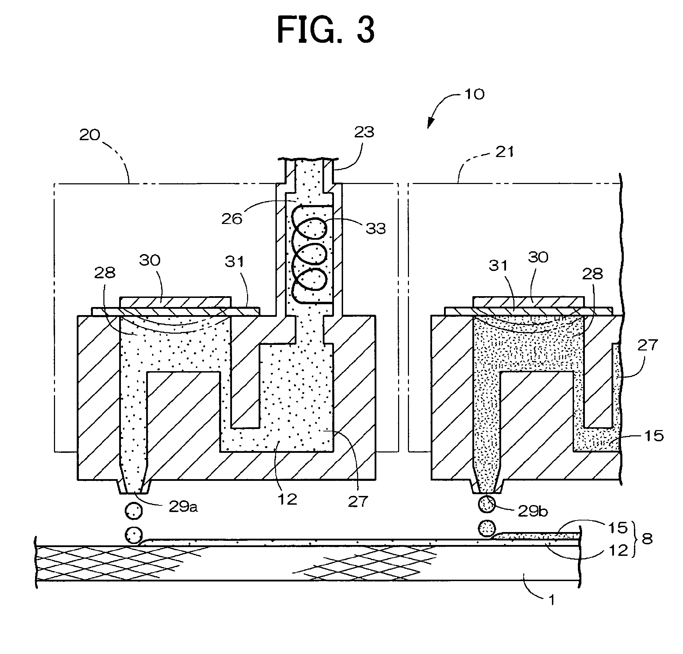

FIGS. 1 to 6 show a first embodiment in which a resin adhesion method and a resin adhesion apparatus according to the present invention are applied to a filament winding apparatus (hereinafter referred to as FW apparatus) which winds fiber on a mandrel. As shown in FIG. 2, the FW apparatus includes a unwinding device 2 which unwinds carbon fiber (hereinafter simply referred to as fiber) from a bobbin B, a tension device 3 which applies a predetermined tension to the fiber 1, a resin adhesion apparatus 4 which causes a resin 8 to adhere to the fiber 1, a traverse device 5 which traverses the fiber 1, and the like, where the fiber 1 adhered with the resin 8 by the resin adhesion apparatus 4 is wound around a mandrel 7 while being traversed by the traverse device 5. The fiber 1 is in a tape form having a flat surface above and below, and the resin adhesion apparatus 4 causes the resin 8 to adhere on an upper surface of the fiber 1 as shown in FIGS. 1 and 3.

As shown in FIGS. 1 to 3, the resin adhesion apparatus 4 includes a droplet injection device 10 which injects the resin 8 towards a surface of the fiber 1 through a droplet injection method, a traveling device 11 which travels the fiber 1 with a predetermined opposing spacing on a lower side of the droplet injection device 10, a first path 14 which includes a base resin tank 13 filled with a base resin 12 and supplies the base resin 12 to the droplet injection device 10, and a second path 17 which includes a curing agent tank 16 filled with a curing agent 15 and supplies the curing agent 15 to the droplet injection device 10. As shown in FIG. 2, in the present embodiment, the traveling device 11 is configured with a pair of drive rollers 11a, 11b arranged on an upstream side and a downstream side in a traveling direction of the fiber 1 so as to sandwich the droplet injection device 10therebetween.

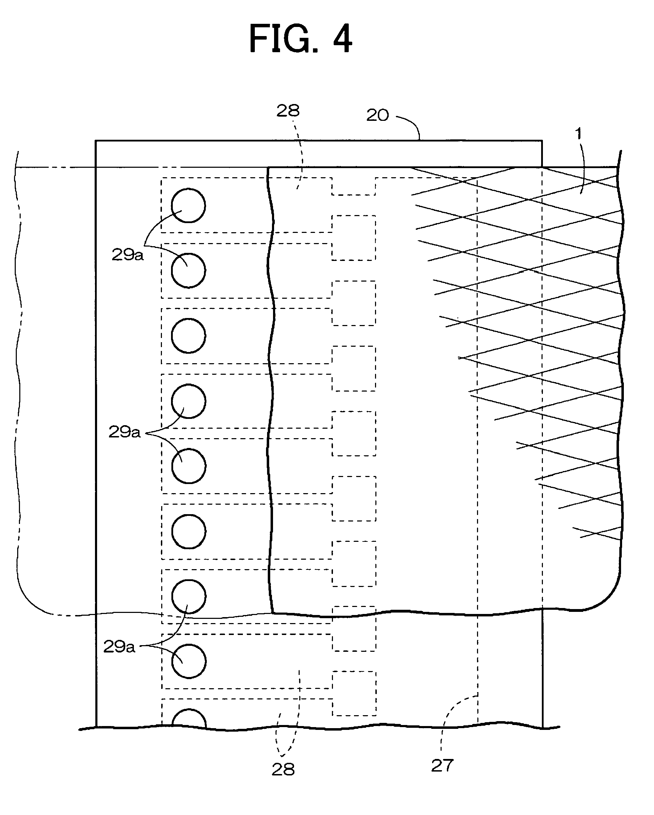

As shown in FIGS. 1 and 4, the droplet injection device 10 is configured by a first head 20 with a base resin injection nozzle group and a second head 21 with a curing agent injection nozzle group, where three of the respective heads 20, 21 are alternately arranged in the traveling direction of the fiber 1. The first path 14 is configured by a feeding flow path 22 extending from the base resin tank 13, and a branched flow path 23 branched from the feeding flow path 22 to the first head 20. Similarly, the second path 17 is configured by a feeding flow path 24 extending from the curing agent tank 16, and a branched flow path 25 branched from the feeding flow path 24 to the second head 21. The flow paths 22, 23, 24, and 25 are made of metal or resin pipe, hose, or the like. An electromagnetic valve, a pump, and the like may be arranged on the first and the second paths 14, 17 to control the flow rate.

As shown in FIGS. 3 and 4, the first head 20 includes one connecting chamber 26 which receives the base resin 13 fed from the branched flow path 23, one accumulating chamber 27 which is arranged connecting to the connecting chamber 26 and which accumulates the base resin 13, and a plurality of pressure chambers 28 branched from the accumulating chamber 27. Each pressure chamber 28 is opened with a nozzle 29a, which becomes an injection port of the base resin 12. The first head 20 has a piezo element 30 that extends and contracts by voltage as a pressure generating source for the pressure chamber 28, and a vibration plate 31 that is vibrated by the piezo element 30 is installed on a barrier wall (upper wall) of each pressure chamber 28. The vibration plate 31 is displaced in position to a convex shape bulging towards the lower side, as shown with a virtual line in Fig. 3, in response to the extension or the contraction of the piezo element 30, whereby the pressure chamber 28 decreases in volume, and the base resin 12 including a predetermined amount of droplets of pico-liter order is injected from the nozzle 29a opened at the lower surface of the first head 20 towards the upper surface of the fiber 1. When the vibration plate 31 returns to a flat state from the displaced state, as shown with a solid line in FIG. 3, the pressure chamber 28 increases in volume, and the base resin 12 is supplied from the accumulating chamber 27 to the pressure chamber 28.

In the connecting chamber 26, a heater (constant-temperature means) 33 which heats the base resin 12 and maintains the base resin 12 at a predetermined temperature (constant temperature of 40 to 100°C), and a temperature sensor (not illustrated) which detects the temperature in the connecting chamber 26 are arranged. The base resin 12 is maintained at a predetermined temperature (e.g., higher than or equal to 80°C) by comparing the detection result of the temperature sensor with a threshold value set in advance, and ON/OFF controlling the heater 33 based on the comparison result.
The configuration of the second head 21 is the same as the configuration of the first head 20, and thus the same reference numerals are denoted on the same members in FIG. 3 and the description thereof will be omitted. Reference numeral 29b indicates a curing agent discharge nozzle.

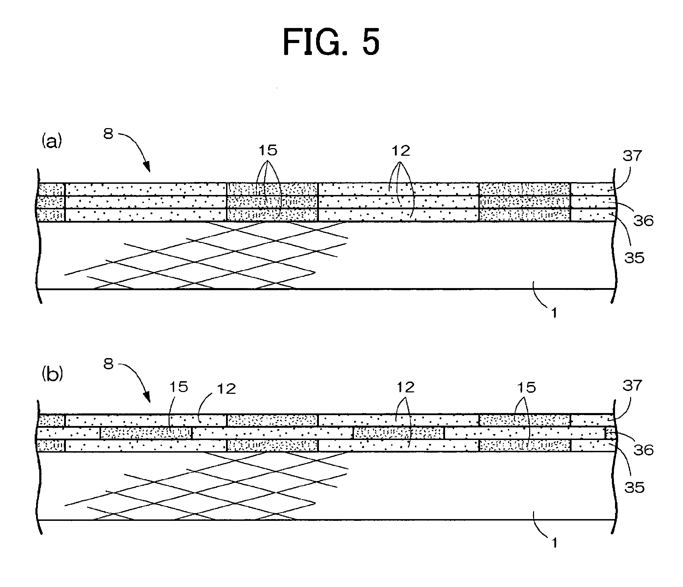

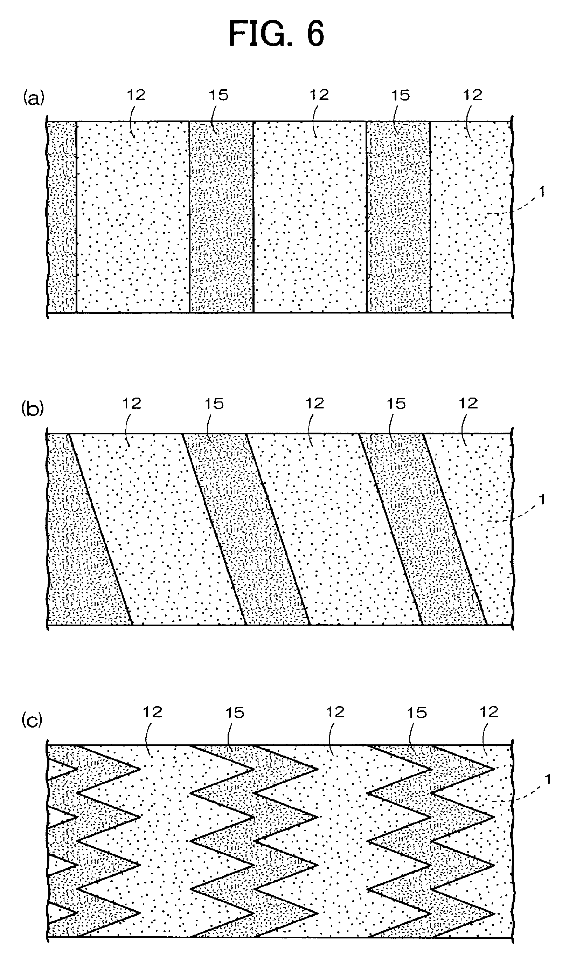

FIGS. 5 and 6 show, in frame format, an adhesion form (discharge form) of the resin on the fiber by the resin adhesion apparatus 4. In the form shown in FIGS. 5A and 5B, first to third adhesion layers 35, 36, and 37 including the base resin 12 and the curing agent 15 are arranged in three layers on the fiber 1, where an application region of the base resin 12 and an application region of the curing agent 15 on the fiber 1 of the adhesion layers 35, 36, and 37 are coincided in FIG. 5A. In FIG. 5B, the application regions of the base resin 12 and the curing agent 15 in the second adhesion layer 36 are shifted with respect to the first and third adhesion layers 35, and 37.

FIGS. 6A to 6C show the application regions of the base resin 12 and the curing agent 15 of each layer 35, 36 and 37. In FIG. 6A, the boundary of the application regions of the base resin 12 and the curing agent 15 runs in a width direction of the fiber 1. In FIG. 6B, the boundary of the application regions of the base resin 12 and the curing agent 15 runs diagonally with respect to the width direction of the fiber 1. In FIG. 6C, the boundary of the application regions of the base resin 12 and the curing agent 15 has a concave-convex shape in the traveling direction of the fiber 1. Thus, the application pattern on the fiber 1 can be changed to various modes in the droplet injection method.

According to the resin adhesion apparatus 4 of the present embodiment, the resin 8 is adhered to the fiber 1 by injecting the resin 8 (base resin 12 and curing agent 15) directly towards the surface of the fiber 1 through the droplet injection method, and thus a predetermined amount of the resin 8 can be constantly and reliably adhered to the fiber 1. There are also advantages in that the injection amount of the resin 8 per unit time can be easily and reliably increased and decreased, and that the adhesion amount of the resin 8 can be easily increased and decreased. Therefore, if the traveling speed of the fiber 1 is increased in an aim of enhancing the processing speed, a predetermined amount of the resin 8 can be adhered to the fiber 1 in just proportion by increasing the injection amount of the resin 8 per unit time from the droplet injection device 10. Therefore, enhancement in the processing speed of the FW molding can be easily responded, and the resin adhering process will not become a rate-limiting step of the FW molding. Furthermore, the present invention is superior in that adhesion unevenness will not occur as in a conventional roller method, and thus a predetermined amount of the resin 8 can be adhered in just proportion evenly over the entire surface of the fiber 1.

Since the base resin 12 and the curing agent 15 are separately applied in pico-liter order, and the base resin 12 and the curing agent 15 are both over-painted on the fiber 1, the base resin 12 and the curing agent 15 both can be reliably mixed on the fiber 1. Accordingly, separation of the fiber 1 from the FW molded article caused by mixing defect of the base resin 12 and the curing agent 15 is prevented, thereby contributing to enhancement in reliability and enhancement in quality of the FW molded article.

If the heater 33 is arranged in the connecting chamber 26, and the base resin 12 and the curing agent 15 are heated to a predetermined temperature with the heater 33, the viscosity of both the base resin 12 and the curing agent 15 can be lowered and the shape of the droplet or the injection amount injected from the nozzle 29 can be stabilized. The adhesion amount of the base resin 12 and the curing agent 15 on the fiber 1 thus can be stabilized thereby contributing to enhancement in quality of the FW molded article. In this two-liquid type heat curable resin, curing may start when the base resin 12 and the curing agent 15 are heated to higher than or equal to 80°C in a mixed state, but in the present embodiment, heating can be carried out above the temperature range (80°C) since the base resin 12 and the curing agent 15 are separately injected toward the fiber 1, the viscosity of the base resin 12 and the curing agent 15 is reliably lowered, and the droplet shape and the injection amount can be stabilized.

The clogging of the nozzle 29 can be prevented by simply performing empty injection periodically or arbitrarily. Therefore, the bothersome maintenance such as cleaning of the rotation roller in the conventional roller method is unnecessary. Due to the mode of separately injecting the base resin 12 and the curing agent 15 to the fiber 1 and mixing both the base resin 12 and the curing agent 15 on the fiber 1, there is absolutely no possibility of curing starting in the resin adhesion apparatus 4, and the trouble of maintenance can be omitted in this regards as well.

### (Second embodiment)

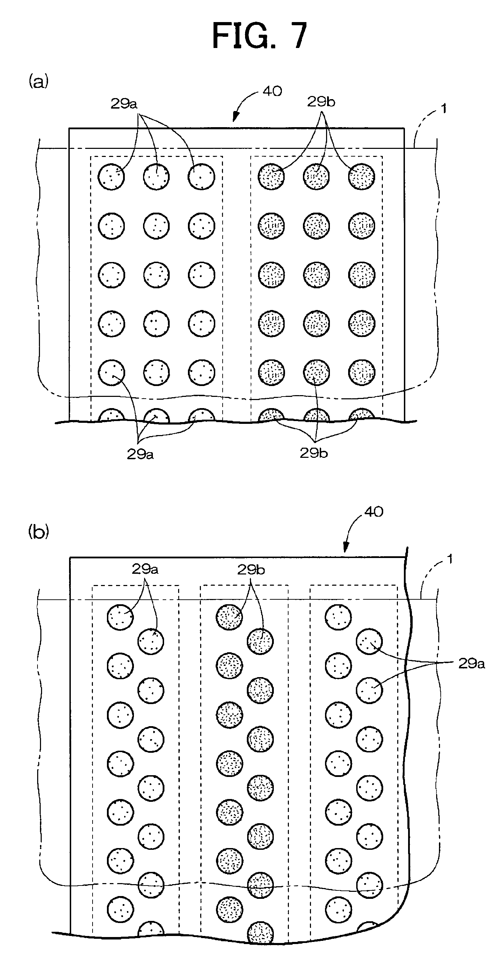

FIG. 7 shows a second embodiment of a resin adhesion method and a resin adhesion apparatus of the present invention. The second embodiment differs from the previous first embodiment in that two types of nozzles, which are the base resin injection nozzle 29a and the curing agent injection nozzle 29b, are arranged in one head 40. In the head 40 of FIG. 7A, the base resin injection nozzle group is arranged on the upstream side in the traveling direction of the fiber 1, and the curing agent injection nozzle group is arranged on the downstream side. With a plurality of nozzles 29a, 29b running in the width direction of the fiber 1 as a unit column, each nozzle group has the unit column arranged in three columns in the traveling direction of the fiber 1. The positions of the nozzles 29a, 29b in the width direction of the fiber 1 of the respective unit columns are matched.

In the head 40 of FIG. 7B, the base resin injection nozzle group and the curing agent injection nozzle group are alternately arranged in the traveling direction of the fiber 1. With the plurality of nozzles 29a, 29b running in the width direction of the fiber 1 as a unit column, each nozzle group has the unit column arranged in two columns in the traveling direction of the fiber 1. The positions of the nozzle in the width direction of the fiber 1 of both unit columns are not matched.

### (Third embodiment)

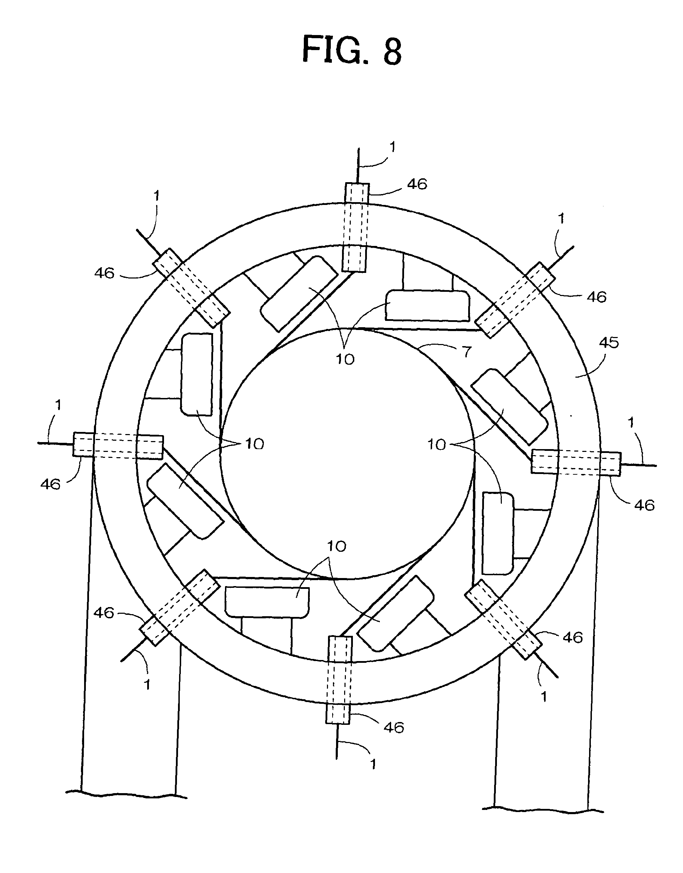

Fig. 8 shows an embodiment in which a resin adhesion method and a resin adhesion apparatus of the present invention are applied to a helical winding device of the FW apparatus. The helical winding device winds the fiber 1 on an outer circumferential surface of the mandrel 7 in helical winding, and includes a cylindrical ring 45 arranged so as to surround the mandrel 7, and a guide pipe 46 which is attached to pass through a tubular wall of the ring 45 and which guides the fiber 1 supplied from the unwinding device (not illustrated) to the mandrel 7. In correspondence to each guide pipe 46, the droplet injection device 10 is attached to an inner surface of the tube wall of the ring 45, and the resin 8 (base resin and curing agent) in droplet form is injected towards the fiber 1 fed from a distal end of the guide pipe 46, so that the resin 8 is adhered to one side surface of the fiber 1. The mandrel 7 is supported on a supporting table (not illustrated), and a helical winding layer is formed on the outer circumferential surface of the mandrel 7 by rotationally displacing the mandrel 7 little by little while moving the supporting table.

According to the third embodiment, the resin 8 can be adhered immediately before winding the fiber 1 on the mandrel 7, and there is no possibility of the resin 8 adhering to the guide pipe 46, a conveyance roller, and the like, and thus the fiber 1 adhered with a suitable amount of the resin 8 can be reliably wound around the mandrel 7.

In the above-described embodiment, a piezo-type droplet injection device using the piezo element has been described by way of example, but the present invention is not limited thereto, and may be a droplet injection device of thermal type, ultrasonic wave type, or the like. The number of heads, the array pattern of the nozzle, and the like are not limited to the above-described embodiments. The constant-temperature means is not limited to the wire-type heater 33, and may be a heating plate and the like. The arrangement location of the constant-temperature means is not limited to the connecting chamber 26 and may be the tank 13, 16 and the like, that is, it may be arranged on the first and the second paths 14 and 17.
While the present invention has been described with respect to preferred embodiments thereof, it will be apparent to those skilled in the art that the disclosed invention may be modified in numerous ways and may assume many embodiments other than those specifically set out and described above. Accordingly, the appended claims are intended to cover all modifications of the present invention that fall within the true spirit and scope of the present invention.

## Claims

1. A resin adhesion method in a filament winding molding for causing a resin to adhere to a fiber by injecting the resin towards a surface of the fiber through a droplet injection method.

2. The resin adhesion method in the filament winding molding according to claim 1 including:
base resin injection step of injecting a base resin of the resin towards the surface of the fiber through the droplet injection method; and
curing agent injection method of injecting a curing agent towards the surface of the fiber through the droplet injection method before or after the base resin injection step.

3. The resin adhesion method in the filament winding molding according to claim 2, wherein the base resin injection step and the curing agent injection step are repeated over a plurality of times.

4. The resin adhesion method in the filament winding molding according to claim 2 or 3, wherein the droplet injection is performed while maintaining the base resin and/or the curing agent at a predetermined temperature.

5. A resin adhesion apparatus for causing a resin to adhere to a fiber in a filament winding molding; the resin adhesion apparatus comprising:
a droplet injection device including a great number of base resin injection nozzles and curing agent injection nozzles;
a traveling device for traveling the fiber with a predetermined opposing spacing with the nozzles;
a first path, including a base resin tank filled with base resin, for supplying the base resin to the droplet injection device; and
a second path, including a curing agent tank filled with curing agent, for supplying the curing agent to the droplet injection device.

6. The resin adhesion apparatus according to claim 5, wherein
the droplet injection device includes a first head with the base resin injection nozzle group and a second head with the curing agent injection nozzle group; and
a plurality of first heads and second heads are alternately arranged along a traveling direction of the fiber.

7. The resin adhesion apparatus according to claim 5, wherein the droplet injection device includes a head in which two types of nozzles, which are the base resin injection nozzle and the curing agent injection nozzle, are arranged in a specific pattern.

8. The resin adhesion apparatus according to any one of claims 5 to 7, further including constant-temperature means for maintaining the base resin and/or the curing agent at a predetermined temperature.
